# EUROPÄISCHE PATENTSCHRIFT

(11) **EP 0 924 949 B1**
(45) Veröffentlichungstag und Bekanntmachung des Hinweises auf die Patenterteilung: **04.10.2006**
(21) Anmeldenummer: 98119616.5
(22) Anmeldetag: 16.10.1998
(51) Int. Cl.: H04Q 9/00, G06F 13/00, G06F 17/40, G05B 23/00, H04M 11/00

(54) **Rechnergestütztes Datenerfassungs-, Datenauswertungs- und Kommunikationssystem für Nutzer einer Liegenschaft**
Computer supported system for data retrieval, analysis and communication for users of a building
Système de détection et analyse des données et de communication, pour utilisateurs d'un immeuble

(30) Priorität: 18.12.1997 DE 19756556
(43) Veröffentlichungstag der Anmeldung: 23.06.1999
(73) Patentinhaber: Techem Energy Services GmbH, 65760 Eschborn (DE)
(72) Erfinder: Gierth, Robert-Christian, 14193 Berlin (DE)
(74) Vertreter: KEIL & SCHAAFHAUSEN Patentanwälte

(56) Entgegenhaltungen:
- EP-A- 0 834 849
- US-A- 4 933 633
- US-A- 4 982 185
- US-A- 5 101 495
- US-A- 5 561 825
- US-A- 5 572 438

## Beschreibung

Die vorliegende Erfindung betrifft ein rechnergestütztes Datenerfassungs-, Datenauswertungs- und Kommunikationssystem für Nutzer einer Liegenschaft gemäß dem Oberbegriff des Anspruchs 1. Unter "Liegenschaft" ist hier eine Wohnung, eine Gewerbe-Immobilie, wie ein Büro oder eine Werkstatt oder eine Produktionsstätte, oder auch ein Gebäude oder ein Gebäudekomplex mit mehreren Wohneinheiten (Hotel oder Ferienwohnungen) oder Gewerbe-Immobilieneinheiten zu verstehen.

Unter Nutzer der Liegenschaft ist sowohl der Mieter/Pächter oder dergl. zu verstehen, als auch der Eigentümer, die vom Eigentümer beauftragte Hausverwaltung oder andere Personen, die mit dieser Liegenschaft betraut sind.

Üblicherweise werden im Stand der Technik Verbrauchswerte in Wohnungen oder gewerblich genutzten Räumen mittels Zählern oder dergl. gemessen, die einmal jährlich abgelesen werden. Die abgelesenen Werte werden ausgewertet und die Benutzer der Wohnungen oder der gewerblich genutzten Räume erhalten mit erheblicher zeitlicher Verzögerung eine Verbrauchsaufstellung und Abrechnung ihrer Strom-, Gas-, oder (Ab-)Wasser- oder Heizkosten.

In geringem Umfang sind auch Systeme im Einsatz, bei denen der Strom-, Gas-, oder Wasser- oder Heizmittelverbrauch in einzelnen Liegenschaften bereits elektronisch erfaßt wird. Aber auch hier findet in der Regel eine Akkumulierung und Speicherung der Werte in oder bei der jeweiligen Liegenschaft (ggf. für mehrere Liegenschaften eines Gebäudes) in einem elektronischen Speichergerät statt, das einmal jährlich ausgelesen wird. Die ausgelesenen Werte werden zentral ausgewertet und die Verbrauchsaufstellungen und Abrechnungen der Strom-, Gas-, oder (Ab-) Wasser- oder Heizkosten erfolgen dementsprechend mit erheblicher zeitlicher Verzögerung.

Dies hat zur Folge, daß zumindest für die überwiegende Mehrzahl von Mietern oder Eigentümern von Liegenschaften eine erhebliche Ungewißheit über zwischen zwei Abrechnungszeitpunkten entstandenen Verbrauch bzw. angefallene Kosten besteht.

Insbesondere für Gebäude mit mehreren (Wohn- oder Büro-)Einheiten besteht auch das Problem, daß z.B. Heizkosten nach einem Verteilungsschlüssel den einzelnen Einheiten zugeordnet werden, der sowohl vom Verbrauch der jeweiligen Einheit, als auch vom Verbrauch der anderen Einheiten abhängt. Somit wäre das unmittelbare Ablesen von Verbrauchszählern zwischen zwei Abrechnungszeitpunkten in der jeweiligen Einheit auch nur ein sehr ungenauer, grober Anhaltspunkt für den tatsächlichen bis dahin angefallenen Verbrauch und auch für die tatsächlichen, am Ende des Abrechnungszeitraumes veranschlagten Kosten.

Aus der US 4,933,633 ist ein System zum Überwachen und Anzeigen von Energieverbrauchswerten bekannt, das wenigstens einen Kommunikationskanal, eine Gruppe von entfernten Stationen mit Informations- und Kommunikationskanälen und eine an die Kommunikationskanäle angeschlossene Zentralstation aufweist, welche die Informationskanäle in den entfernten Stationen ansprechen kann. Somit kann die Zentralstation einen an den Informationskanal einer entfernten Station angeschlossenen Energieverbrauchssensor ansprechen und erhält die Energieverbrauchsdaten von diesem Sensor, berechnet einen Energieverbrauch und sendet ein Verbrauchsanzeige-Signal an ein Display der entfernten Station.

Aufgabe der Erfindung ist es, einen genauen Erwartungswert für den Heizungswert zu ermitteln, der mit dem aktuellen Verbrauch verglichen wird.

Zur Lösung dieser Aufgabe sieht die Erfindung ein System mit den Merkmalen des Anspruchs 1 vor, in dem einer Liegenschaft wenigstens eine Meßstelle zugeordnet ist, die dazu eingerichtet ist, einen die Liegenschaft betreffenden charakteristischen Verbrauchswert zu erfassen. Mittels einer dazu eingerichteten Datenübertragungseinrichtung wird ein den jeweiligen Verbrauchswert wiedergebendes Signal von der Meßstelle an eine zentrale Rechnereinheit übermittelt. In einer Datenbasis ist ein die Liegenschaft betreffender Datensatz geführt, wobei der Datensatz zumindest den übermittelten aktuellen Verbrauchswert und einen mit diesem in Beziehung setzbaren, vorherbestimmten Erwartungswert enthält. Ein Benutzer des Systems hat Zugriff auf den Datensatz, um den aktuellen Stand des Verbrauchswertes und ein Verhältnis zwischen dem aktuellen Verbrauchswert und dem vorherbestimmten Erwartungswert zu erhalten.

Der Benutzer des Systems kann sich also stets einen zeitnahen, wenn nicht sogar momentan aktuellen Überblick über den Stand der Verbrauchswerte verschaffen, ohne auf eine erst in mehreren Monaten zugängliche Aufstellung und Abrechnung warten zu müssen. Dies ist für Heizwerte möglich, da in der zentralen Rechnereinheit auch die Verbrauchswerte der anderen Wohnungen/Büros verfügbar sind, aus denen der jeweilige Erwartungswert bzw. der zugehörige Verbrauchsanteil unter Zugrundelegung des Verteilungsschlüssels ermittelbar ist.

Insbesondere kann der Benutzer mit dem erfindungsgemäßen System auch jederzeit sehen, ob er derzeit einen Verbrauch hat, der sich im Rahmen des vorbestimmten Erwartungswertes bewegt. Sollte dies nicht der Fall sein, besteht die Möglichkeit, unmittelbar Abhilfe zu schaffen. Dabei ist sowohl der Fall berücksichtigt, daß der Benutzer seine Verbrauchsgewohnheiten ggf. ändert, als auch der Fall, daß der Verbrauch aufgrund eines technischen Defektes (z.B. eines Lecks in einer Wasserleitung) als zu hoch erkannt wird und dieser Defekt behoben werden kann.

Ein entscheidender Unterschied zu bisher bekannten Systemen besteht darin, daß bei der Erfindung in der Liegenschaft erfaßte Daten mit Werten verglichen werden, die sowohl technische Vorgaben, u.a. den aktuellen Temperaturverlauf, als auch administrative Vorgaben darstellen. In Abhängigkeit von diesem Vergleich kann dann eine Einflußnahme auf die Verbraucher in der Liegenschaft genommen werden, in den bei signifikanten Änderungen von der zentralen Recheneinheit eine automatisierte Mitteilung übermittelt wird.

Die administrativen Vorgaben können sich unabhängig von den technisch bedingten Vorgaben ändern und so den Erwartungswert beeinflussen. Wenn sich z.B. der Verteilungsschlüssel der Anteile an den Heizkosten ändert, oder aufgrund von Leerständen einzelner Wohnungen in einem Gebäude andere Wohnungen stärker zu heizen sind, kann dies auf den Vorgabe- oder Erwartungswert einen Einfluß haben. Bei bisherigen Systemen wurde dies dem Benutzer am Ende der Verbrauchs- oder Abrechnungsperiode mehr oder weniger klar aufgeschlüsselt und dargestellt.

Mit dem erfindungsgemäßen System ist eine derart zeitnahe Information des Benutzers und eine Einflußnahme auf die Verbraucher möglich, daß eine Vielzahl von derzeitigen Problemen vermieden wird.

Insbesondere die unmittelbare Ermittlung von Verbrauchswerten und der damit verbundenen Kosten, die auch von Nutzern anderen, zum gleichen Gebäude gehörenden Liegenschaften beeinflußt werden, ist mit diesem System möglich. Dazu muß lediglich nach jeder (oder einigen) Aktualisierung(en) der Verbrauchswerte in der Datenbasis der zentralen Rechnereinheit ein momentaner Abrechnungslauf durchgeführt werden. Die dabei ermittelten Daten werden dann in die jeweiligen Datensätze eingeschrieben und den Benutzern zugänglich gemacht.

Außerdem können daraus resultierende Unstimmigkeiten oder Abnormalitäten im Verbrauch festgestellt und behoben werden.

Bei einer derzeit bevorzugten Ausführungsform der Erfindung ist die Meßstelle dazu eingerichtet, einen Strom-, (Ab-) Wasser, und/oder Gas-Verbrauchswert, oder einen Wärmemengenwert oder einen Heizmengenwert zu erfassen, wobei der jeweilige Verbrauchswert sich auf die ganze Liegenschaft oder auf einen Teil bezieht. Damit läßt sich einerseits der gerätetechnische Aufwand in Grenzen halten.

Andererseits ist z.B. in Gewerbe-Immobilien durch eine Verbrauchserfassung für jeden Einzelraum der Heizung oder des Stromverbrauchs auch eine klare Kostenstellenanalyse oder im Falle einer Fluktation der Nutzer des jeweiligen Raums eine klare Kostentrennung ohne nennenswerten Aufwand möglich. Bisher mußte hierfür eine zusätzlichen Aufwand und in der Regel Kosten verusachende Zwischenablesung gesorgt werden.

In Abhängigkeit davon, welchen Aufwand ein Systembetreiber bereit ist, bei der Übertragung der Daten zu treiben, ist die Datenübertragungseinrichtung entweder dazu eingerichtet, erfaßte Meßwerte unmittelbar nach oder bei deren Erfassung an die zentrale Rechnereinheit weiterzuleiten, oder mehrere Meßwerte, ggf. auch von unterschiedlichen Meßstellen zusammengefaßt an die zentrale Rechnereinheit weiterzuleiten.

Insbesondere, wenn ein Gebäude mit mehreren Wohn- oder Büroeinheiten mit dem erfindungsgemäßen System ausgestattet werden soll, bietet sich eine auf das Gebäude bezogene zentrale Erfassung der Meßwerte in einem Steuerrechner an, der dann (z.B.) bei Nacht eine Übertragung der Meßwerte an die zentrale Rechnereinheit ausführt.

Dies läßt sich beispielsweise mittels einer Nachrichtenübertragung realisieren, bei der automatisiert Nachrichten mit den gemessenen Werten und den zugehörigen Verbrauchsstellen gemäß vorbestimmten Protokollen (z.B. HTTP, MIME, FTP, SMTP, NNTP etc.) erstellt werden, die dann z.B. über das Internet an die zentrale Rechnereinheit übertragen werden. Es ist jedoch auch möglich, anstelle einer Übertragung über das Internet oder einer direkten Datenfernleitung über Modem-Verbindungen die Daten mittels an sich bekannter Bus-Protokolle (M-Bus, Profibus etc.) zwischen der zentralen Rechnereinheit und Steuerrechner hin- und her zu übermitteln.

Bei einer bevorzugten Ausführungsform des erfindungsgemäßen System enthält die Datenbasis neben dem die Liegenschaft betreffenden Datensatz für Benutzer weitere Informationen, die direkt oder indirekt mit der jeweiligen Liegenschaft oder einer Gruppe von Liegenschaften in Verbindung stehen.

Dabei kann es sich um allgemeine Informationen zu dem jeweiligen Gebäude (Urkunden, Eigentümer, Mieter, Wirtschaftspläne, Verträge mit Handwerkern, Hausmeister etc., Hausordnung, Eigentümerversammlungsprotokolle, Begehungsberichte mit zugehörigen Bildern, etc.), spezielle Informationen zu den einzelnen Liegenschaften (Adresse des Mieters, Eigentümers, Bankverbindungen, Mietzins, Nebenkosten, Einzelabrechnungen, prognostizierte Einzelverbrauchsdaten, Statistik von Einzelverbrauchsdaten aus der Vergangenheit, Mietverträge, Schriftwechsel mit Mieter und/oder Eigentümer etc.), dem Gebäude zuordenbare Serviceleistungen (Formulare für Adressenänderungen, oder Mängelmeldungen etc., Schwarze-Brett-Funktionen für Eigentümer und/oder Mieter des Gebäudes mit aktuellen Informationen, Datenbanken zum Mietrecht, Wohnungseigentumsgesetz, etc., Wohnungs-, Fenster-, oder Teppichreinigungsdienste, Pflanzen- oder Haustierpflegedienste, Babysitterdienste etc.,) oder allgemeine Serviceleistungen (Online Shopping, Online Banking, Essenlieferservice, Reisebürodienste, etc.) handeln.

Um Anforderungen des Datenschutzes gerecht zu werden, aber auch aus allgemeinen Akzeptanzgründen der Benutzer erhält bei einer bevorzugten Ausführungsform ein Benutzer des Systems auf den Datensatz oder auf andere Bereiche der Datenbasis oder anderer vorstehend beschriebener Dienste erst nach einer Überprüfung seiner Zugangsberechtigung Zugriff auf die Datenbasis oder von Teilen davon.

Bei einer bevorzugten Ausführungsform des erfindungsgemäßen Systems ist ein einer Meßstelle zugeordneter Verbraucher bei Überschreiten eines vorherbestimmten Verbrauchswertes durch ein von der zentralen Rechnereinheit erzeugten Steuersignals abschaltbar, wobei das Steuersignal mittels einer Datenübertragungseinrichtung an den Verbraucher übermittelbar ist. Auch hierbei kann eine automatisiert erstellte Nachricht mit einer Kennung des jeweiligen Verbrauchers gemäß vorbestimmten Protokollen (z.B. HTTP, MIME, FTP, SMTP, NNTP etc.) in der zentralen Rechnereinheit erstellt werden, dann z.B. über das Internet an den Steuerrechner in dem jeweiligen Gebäude übertragen werden. Auch hier ist es möglich, anstelle einer Übertragung über das Internet oder einer direkten Datenfernleitung über Modem-Verbindungen die Daten mittels an sich bekannter Bus-Protokolle (M-Bus, Profibus etc.) zwischen der zentralen Rechnereinheit und Steuerrechner hin- und her zu übermitteln.

Mittels entsprechender Gebäudeleittechnik oder anderer Fernwirkeinrichtungen kann dann von dem jeweiligen Steuerrechner der entsprechende Verbraucher ausgeschaltet oder in seiner Leistungsaufnahme oder Durchflußmenge begrenzt werden.

Insbesondere wenn die vorstehend beschriebene automatisierte Verbraucherabschaltung realisiert ist, wird zusätzlich von der zentralen Rechnereinheit einem Nutzer bei Überschreiten eines vorherbestimmten Verbrauchswertes eine Warnmitteilung über Überschreiten des jeweiligen vorherbestimmten Verbrauchswertes übermittelt. Alternativ dazu kann aber auch nur die (in der zentralen Rechnereinheit automatisiert erstellte) Warnmitteilung an den Nutzer gesendet werden, damit dieser die Möglichkeit hat, unabhängig davon, ob er die Datenbasis mit den entsprechenden Daten selbst einsieht, entsprechende Maßnahmen nach dieser Mitteilung bzw. Aufforderung zu ergreifen.

Bei einer bevorzugten Ausführungsform des erfindungsgemäßen Systems wird der jeweilige vorherbestimmte Erwartungswert aus einem Vergleich mit entsprechenden Verbrauchswerten anderer Liegenschaften und/oder mit Verbrauchswerten der jeweiligen Liegenschaft aus der Vergangenheit bestimmt. Dabei können sowohl akkumulierte Erwartungswerte (bezogen auf den erwarteten Gesamtverbrauch bis zum heutigen Tag, zur laufenden Woche oder zum laufenden Monat, aber auch punktuelle Erwartungswerte (z.B. laufender oder vergangener Monat) verwendet werden. Insbesondere, wenn dabei auch Erfahrungswerte aus vergleichbaren Liegenschaften z.B. des gleichen Gebäudes einbezogen werden, kann eine hohe Genauigkeit erzielt werden.

So kann der Benutzer z.B. sehr schnell erkennen, wenn während einer Woche oder eines Monats der Heizperiode seine Heizung erheblich mehr verbraucht, als in entsprechenden Zeiträumen in der Vergangenheit. Erfindungsgemäß wird von dem Steuerechner des jeweiligen Gebäudes an die zentrale Rechnereinheit eine Übermittlung aktueller Temperaturverläufe erfolgen, so daß Temperaturschwankungen von einem Jahr zum anderen bei der Bestimmung der Erwartungswerte berücksichtigt, bzw. Herausgerechnet werden können.

Je nach dem, wie oft Meßwerte von der Meßstelle an die zentrale Rechnereinheit übermittelt werden, dies kann z.B. täglich, wöchentlich oder monatlich geschehen, wird auch eine entsprechende Aktualisierung des jeweiligen Datensatzes vorgenommen. Erfindungsgemäß wird sobald sich eine signifikante Änderung ergeben hat, oder nach einer vorbestimmten Anzahl von Aktualisierungen des jeweiligen Datensatzes der Liegenschaft wird dann von der zentralen Rechnereinheit einem Nutzer eine entsprechende Mitteilung übermittelt. Eine derartige Mitteilung kann z.B. in Form einer automatisiert erstellten (e-mail) Mitteilung erfolgen, die an den Nutzer geschickt wird. Damit wird unnötig häufiger Datenaustausch vermieden.

Ein wesentlicher Unterschied zu bekannten derartigen Systemen besteht darin, daß alle in der zentralen Rechnereinheit für die Benutzer vorgehaltenen oder erstellten technischen und administrativen Daten und Informationen, aber auch alle anderen dem Benutzer angebotenen Serviceleistungen in einer einheitlichen Darstellungsweise (z.B. als HTML-Seiten) für den Benutzer aufbereitet und zum Abruf bereitgehalten werden. Diese gleichmäßige und einheitliche Darbietung der Daten und Informationen verbunden mit der Aktualität der abrufbaren Daten und Informationen und der damit vorhandenen Möglichkeit, auf Veränderungen sofort reagieren zu können, stellt einen bisher im Bereich der Haustechnik nicht gekannten Komfort für die Benutzer dar.

Außerdem erleichtert die einheitliche Darbietung der Daten und Informationen eimen Benutzer der Zugang und das Verständnis der angebotenen Inhalte, so daß auch technisch nicht versierte Benutzer des Systems dieses mit Gewinn in Anspruch nehmen können.

Weitere Merkmale, Eigenschaften, Vorteile und Abwandlungs- oder Ergänzungsmöglichkeiten des erfindungsgemäßen Systems werden anhand der nachstehenden Beschreibung der Zeichnung erläutert.
Fig. 1 zeigt eine erste Ausführungsform des erfindungsgemäßen Datenerfassungs-, Datenauswertungs-, und Kommunikationssystems für Nutzer einer Liegenschaft.
Fig. 2 zeigt eine zweite Ausführungsform des erfindungsgemäßen Datenerfassungs-, Datenauswertungs-, und Kommunikationssystems für Nutzer einer Liegenschaft.

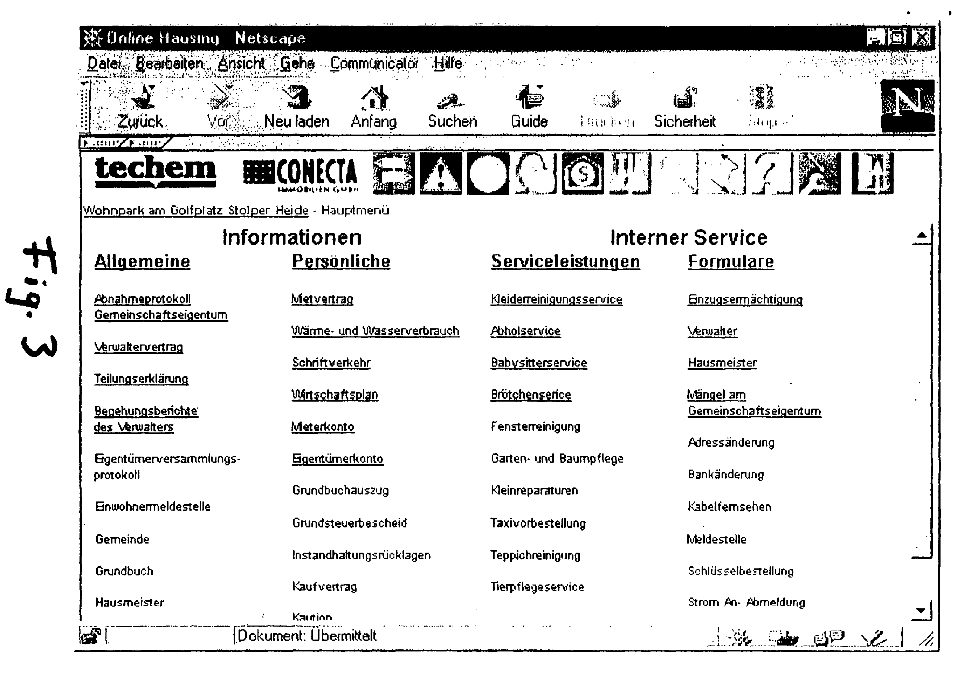

Fig. 3 zeigt eine Darstellung der dem Nutzer einer Liegenschaft mittels des erfindungsgemäßen Systems angebotenen Funktionen und Dienstleistungen.

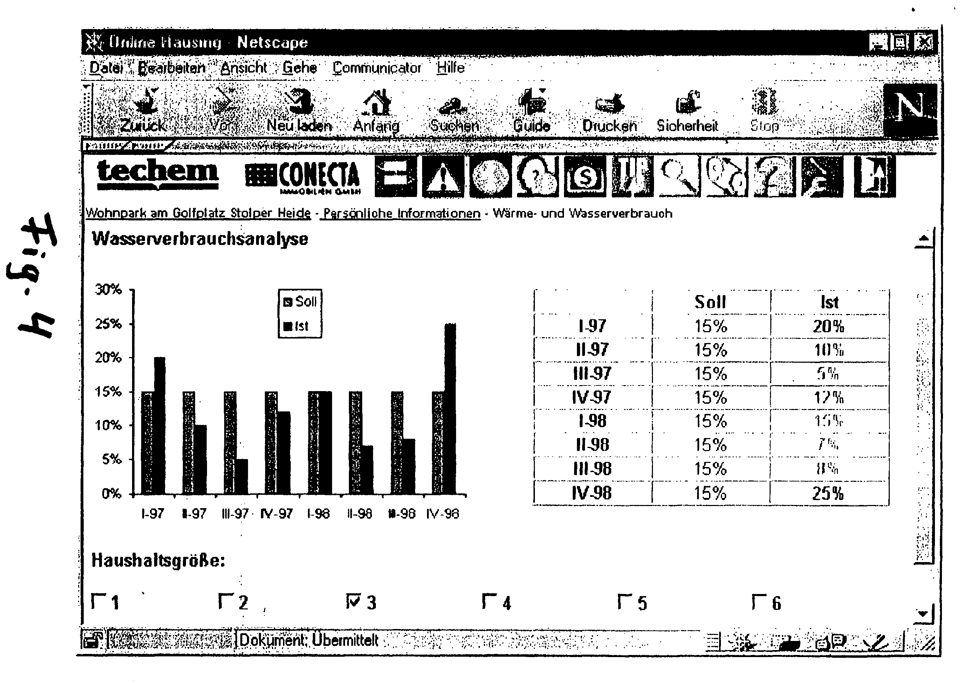

Fig. 4 zeigt eine Darstellung der graphischen Wiedergabe aktueller Verbrauchswerte im Vergleich zu Vorjahreswerten.

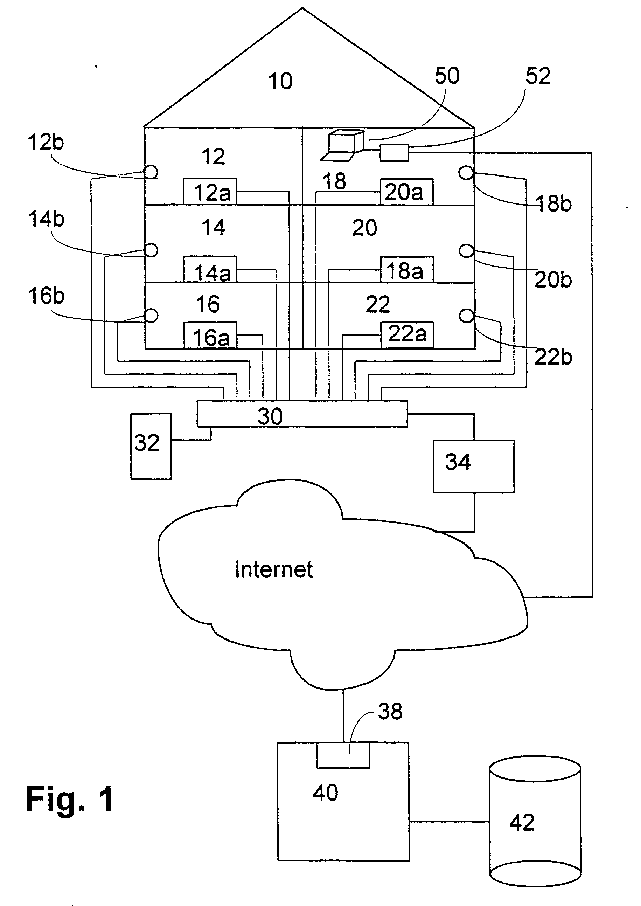

In der in Fig. 1 gezeigten Ausführungsform der Erfindung sind in einem Gebäude 10 mehrere Wohn- oder Büroeinheiten 12, 14, 16, 18, 20, und 22 mit Verbrauchern ausgestattet. Als Beispiel ist hier in jeder Wohn- oder Büroeinheit 12, 14, 16, 18, 20, und 22 jeweils eine Elektroheizung 12a, 14a, 16a, 18a, 20a, und 22a gezeigt. Es können jedoch auch andere Verbrauchsstellen, wie z.B. Stromanschlüsse, Gasherde oder Gasheizungen, Wasserverbraucher oder Heizungen vorhanden sein, die in das erfindungsgemäße System eingebunden sind. Den Elektroheizungen 12a, 14a, 16a, 18a, 20a, und 22a ist jeweils eine Meßstelle 12b, 14b, 16b, 18b, 20b, und 22b in Form eines Sensors zugeordnet, mit dem der betreffende charakteristische Verbrauchswert zu erfassen ist.

Die Sensoren sind über entsprechende Leitungen mit einem Steuerrechner 30 verbunden, der die Signale der Sensoren 12b, 14b, 16b, 18b, 20b, und 22b empfängt. Der Steuerrechner 30 ist mit einer Speichereinheit 32 ausgestattet, in der ein Steuerprogramm zum Auslesen der Sensoren 12b, 14b, 16b, 18b, 20b, und 22b und zum Steuern einer Datenübertragungseinrichtung 34 in Form eines Modems oder eines ISDN-Interface abgelegt ist. Falls die Kommunikation zwischen dem Steuerrechner 30 und der zentralen Rechnereinheit 40 über eine M-Bus-Verbindung, eine Profi-Bus-Verbindung oder dergl. abgewickelt wird, sind in dem Steuerrechner 30 und in der zentralen Rechnereinheit 40 entsprechende Interface-Karten vorzusehen.

Außerdem werden in der Speichereinheit 32 den empfangenen Signalen entsprechende Werte zusammen mit Kennungen der jeweiligen Wohn- oder Büroeinheiten vor ihrer Versendung zwischengespeichert. Es ist jedoch zur Vereinfachung der Datenorganisation auch möglich, die erfaßten Meßwerte unmittelbar nach oder bei deren Erfassung an die zentrale Rechnereinheit weiterzuleiten, anstatt mehrere Meßwerte, ggf. auch von unterschiedlichen Meßstellen zusammengefaßt an die zentrale Rechnereinheit weiterzuleiten.

Die Versendung oder Übermittlung der den jeweiligen Verbrauchswert wiedergebendes Signale von den Meßstellen 12b, 14b, 16b, 18b, 20b, und 22b an eine zentrale Rechnereinheit 40, die ebenfalls ein Modem bzw. ein ISDN-Interface 38 aufweist, erfolgt im vorliegenden Beispiel über einen Internet-Zugang. Dazu wählt sich der Steuerrechner 30 über das Modem 34 einmal am Tag oder einmal pro Woche (oder pro Monat) in das Internet ein und sendet eine Nachricht an die zentrale Rechnereinheit 40, in der für jede Verbrauchsstelle 12a ... 22a der jeweilige Meßwert aus dem zugehörigen Sensor 12b ... 22b enthalten ist. Anstelle der Kommunikation zwischen dem Steuerrechner 30 und der zentralen Rechnereinheit 40 über Internet, kann der Datenaustausch auch über eine M-Bus-Verbindung, eine Profi-Bus-Verbindung oder dergl. abgewickelt werden. Anstelle der vorstehend beschriebenen Übertragungswege (Internet, M-Bus, Profi-Bus) kann auch eine Direkt-Wählverbindung über das terrestrische Mobilfunk-Netz eingesetzt werden, über die eine Datei mit den entsprechenden Daten angefordert und ausgesendet wird.

Der zentralen Rechnereinheit 40 ist eine Datenbasis 42 zugeordnet, in der ein die Liegenschaft betreffender Datensatz geführt ist.

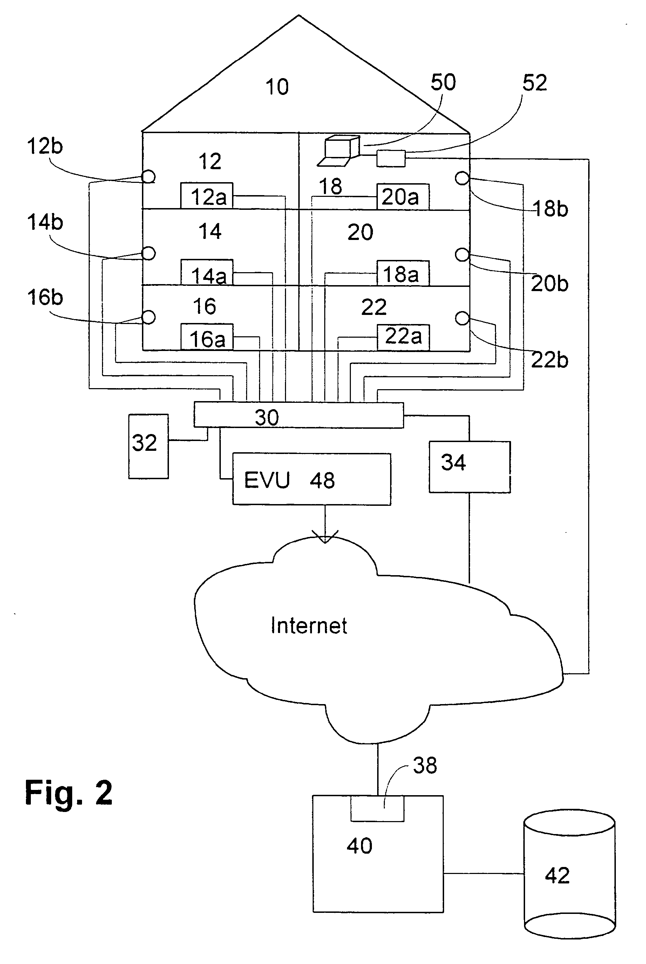

Falls die Verbrauchsmessung mittels Sensoren 12b ... 22b erfolgt, die ihre Signale an einen Erfassungsrechner 48 eines Energieversorgungsunternehmens oder eines Energie-Verbrauchsableseunternehmens senden, können die in diesem Erfassungsrechner 48 aufbereiteten Daten auch von dort durch die zentrale Rechnereinheit 40 abgerufen werden, bzw. durch den Erfassungsrechner 48 an die zentrale Rechnereinheit 40 gesendet werden. Diese Ausführungsform der Erfindung ist in Fig. 2 veranschaulicht, wobei gegenüber Fig. 1 unveränderte Komponenten die gleichen Bezugszeichen wie in Fig. 1 haben und nicht nochmals erläutert sind.

Nachstehend ist ein Beispiel eines Datensatzes veranschaulicht, wie er in dem erfindungsgemäßen System verwendet wird. Es versteht sich dabei, daß dieser Beispiel-Datensatz nicht alle möglichen Einträge und Erweiterungsmöglichkeiten enthält. Hier sind lediglich einige Einträge aufgeführt, die zum Verständnis der Erfindung und ihrer Funktion dienlich sind.

Hier ist am Beispiel der monatlichen erwarteten Heizleistungen und der tatsächlichen Heizleistungen für die jeweiligen Monate gezeigt, wie ein Benutzer des Systems bei einem Zugriff auf den Datensatz, den aktuellen Stand des Verbrauchswertes und ein Verhältnis zwischen dem aktuellen Verbrauchswert und dem vorherbestimmten Erwartungswert erhalten kann. Das Verhältnis zwischen dem aktuellen Verbrauchswert und dem vorherbestimmten Erwartungswert wird jeweils beim Eintrag des empfangenen aktuellen Verbrauchswertes bestimmt. Wenn z.B. der aktuelle Verbrauchswert wöchentlich aktualisiert wird, kann ein Benutzer auch während des laufenden Monats (durch Extrapolation) annähernd feststellen, ob er bereits im laufenden Monat seinen Erwartungswert überschreiten wird oder nicht. Wenn z.B. in der Monatsmitte ein erheblich größerer Anteil als 50% des Erwartungswertes verbraucht ist, besteht eine hohe Wahrscheinlichkeit bei gleichbleibendem Verbrauchsverhalten den Erwartungswert zu überschreiten.

| Datenfeld | Inhalt | Verhältnis |
|---|---|---|
| Liegenschafts-Nummer | **2345** | |
| Anschrift | **Badstr. 5** | |
| Ort | **88888 Dorfen** | |
| Eigentümer | **Muster, Max** | |
| Anschrift | **Langstr. 3** | |
| Ort | **99999 Hausen** | |
| Liegenschaftsfläche | **125 qm** | |
| erwartete Heizleistung Jan | **50 kWh** | |
| erwartete Heizleistung Feb | **55 kWh** | |
| erwartete Heizleistung Mär | **40 kWh** | |
| erwartete Heizleistung Apr | **30 kWh** | |
| erwartete Heizleistung Mai | **20 kWh** | |
| erwartete Heizleistung Jun | **10 kWh** | |
| erwartete Heizleistung Jul | **5 kWh** | |
| erwartete Heizleistung Aug | **2 kWh** | |
| erwartete Heizleistung Sep | **10 kWh** | |
| erwartete Heizleistung Okt | **25 kWh** | |
| erwartete Heizleistung Nov | **35 kWh** | |
| erwartete Heizleistung Dez | **45 kWh** | |
| tatsächliche Heizleistung Jan | 55 kWh | **+10%** |
| tatsächliche Heizleistung Feb | 65 kWh | **+18%** |
| tatsächliche Heizleistung Mär | **30 kWh** | **-25%** |
| tatsächliche Heizleistung Apr | 25 kWh | **-17%** |
| tatsächliche Heizleistung Mai | 20 kWh | **+/-0%** |
| tatsächliche Heizleistung Jun | | |
| tatsächliche Heizleistung Jul | | |
| tatsächliche Heizleistung Aug | | |
| tatsächliche Heizleistung Sep | | |
| tatsächliche Heizleistung Okt | | |
| tatsächliche Heizleistung Nov | | |
| tatsächliche Heizleistung Dez | | |

Da in der zentralen Rechnereinheit 40 sämtliche Wohnungen/Büros eines Gebäudes mit derartigen Datensätzen geführt sind, kann auch dann eine gegenwartsnahe Information und auch Prognose für einen Benutzer bereitgestellt werden, wenn z.B. die einer Liegenschaft zuzuordnenden Heizkosten auch teilweise vom Verbrauch anderer Liegenschaften des Gebäudes abhängen.

Ein Benutzer kann mittels eines Terminals 50 in Form eines PC, einer Set-Top-Box für das Fernsehgerät, eines Bildschirms mit abgesetzter oder integrierter Tastatur (Touchscreen) oder dergl., das mit einem Modem 52 ausgestattet ist, über das Internet auf die zentrale Rechnereinheit 40 zugreifen, um Einblick in seinen Datensatz zu nehmen.

Die zentrale Rechnereinheit 40 kann auch über eine direkte Datenverbindung anstatt über eine Internetverbindung mit einem, mehreren oder allen Terminals 50 in einer Liegenschaft kommunizieren. Dazu ist zum Beispiel die zentrale Rechnereinheit 40 im gleichen Gebäude oder nahe bei dem Gebäude untergebracht, in dem sich die Liegenschaften befinden. Die Datenbasis 42 wird zu Zeiten niedrigen Zugriffsverkehrs (zum Beispiel nachts) von außen (durch den Rechner der Hausverwaltung) aktualisiert. Dies hat den Vorteil, daß die Internetkosten (Provider, Telefongesellschaft etc.) wegfallen und die Kommunikation zwischen den Terminals 50 und der zentralen Rechnereinheit 40 erheblich schneller abgewickelt werden kann. Außerdem erhöht sich die Sicherheit gegenüber unbefugten Dritten.

Die Datenbasis enthält neben dem die Liegenschaft betreffenden Datensatz weitere Informationen für Benutzer, die direkt oder indirekt mit der jeweiligen Liegenschaft oder einer Gruppe von Liegenschaften zusammenhängen. Z.B. kann aus der Gesamtheit aller Datensätze für die Liegenschaften eines Gebäudes eine Verbrauchsstatistik bezogen auf das Gebäude ermittelt werden. Damit können z.B. ungünstig zu beheizende oder schlecht isolierte Liegenschaften eines Gebäudes ermittelt werden.

Außerdem können Gebäudestammdaten und Dienstleistungsangebote geführt werden, wie z.B. - Flächenaufstellungen aller Liegenschaften des Gebäudes,
- Aufstellungen aller Eigentümer des Gebäudes und deren Eigentumsanteile,
- Mietzinsübersichten und Mietstaffelübersichten aller Liegenschaften des Gebäudes,
- Mieterlisten aller Liegenschaften des Gebäudes,
- Wohngeldübersichten aller Liegenschaften des Gebäudes,
- Verwaltungsdaten der Mieter und Eigentümer aller Liegenschaften des Gebäudes (Adressen, Bankverbindungen, Mietkonten, Wohngeldkonten etc.)
- Nebenkostenabrechnungen bezogen auf alle oder einzelne Liegenschaften und deren aktueller Stand,
- Betriebskostabrechnungen bezogen auf alle oder einzelne Liegenschaften und deren aktueller Stand,
- Verbrauchsabrechnungen bezogen auf alle oder einzelne Liegenschaften und deren aktueller Stand,
- Wirtschaftspläne bezogen auf alle oder einzelne Liegenschaften und deren aktueller Stand,
- Vertragsunterlagen (z.B. Verwaltervertrag, Hausmeistervertrag, Teilungserklärung und Nachträge dazu, Bewirtschaftungsverträge, Hausordnung, aktuelle und frühere Aushänge, etc.),
- Schriftverkehr mit Eigentümern und/oder Mietern bezogen auf alle oder einzelne Liegenschaften,
- Formulare für Adressenänderungen oder Bankverbindungsänderungen, Mängelmeldungen etc.
- elektronische führbares Haushaltsbuch, in dem die Verbrauchskosten automatisch schon eingetragen sind.
- Cluster-Telefonie (Telefonieren mit allen Nutzern im Gebäude ohne Einschaltung einer Telefongesellschaft.
- Elektronische Steuerung der elektrischen Verbraucher in einer Liegenschaft (Waschmaschine, Spülmaschine Rolladensteuerung, Beleuchtung im Abwesenheitsfall des Nutzers etc.)
- Alarm- Sicherheitstechnik (Brand- Einbruchsmelder)
- Notrufmelder (betreutes Wohnen für Senioren)
- Automatische Störmeldungen an Handwerker (Heizung, Wasser) sowie Fernwartungsdienste.

Diese einzelnen Funktionen oder Dienstleistungen können als Baum strukturiert dem Benutzer dargeboten werden, um einen möglichst einfachen Zugang zu erlauben. Zum Beispiel kann auch ein Nutzer in der Datenbasis 42 bereitgehaltene Formulare aufrufen und sich in sein Terminal 50 übertragen lassen, diese Formulare in seinem Terminal 50 ergänzen bzw. ausfüllen und dann an die Rechnereinheit 40 zurücksenden. In der Rechnereinheit 40 werden in Verbindung mit den Daten aus der Datenbasis 42 diese Angaben ausgewertet und ggf. Entsprechende Aktionen eingeleitet (Änderung der Kontoverbindung, Bestellung einen Dienstleistung oder dergl.).

Es versteht sich, daß ein Benutzer des Systems auf den Datensatz oder die vorstehend aufgeführten Details erst nach einer Überprüfung seiner Zugangsberechtigung Zugriff erhält. Auch wenn eine Zugriffsberechtigung eines Benutzers vorliegt, werden nur solche Funktionen oder Dienstleistungen von der Rechnereinheit 40 bzw. Datenbasis 42 an sein Terminal 50 gesendet und dort angezeigt, die für ihn relevant und auch freigegeben sind. Damit erfährt ein Nutzer gar nicht, daß ggf. auch noch weitere Funktionen in dem System vorhanden sind, die jedoch Nutzern mit weitergehender Zugangs-Berechtigung vorbehalten sind.

Zusätzlich oder anstatt eines durch den Benutzer initiierten zugriffs auf die Datenbasis kann auch die zentrale Rechnereinheit den jeweiligen Benutzer oder eine bestimmte Benutzergruppe von sich aus bei Vorliegen bestimmter Ereignisse oder Kriterien benachrichtigen. Z.B. kann von der zentralen Rechnereinheit einem Nutzer nach einer vorbestimmten Anzahl von Aktualisierungen des jeweiligen Datensatzes der Liegenschaft eine entsprechende Mitteilung übermittelt werden.

Alternativ oder zusätzlich dazu kann von der zentralen Rechnereinheit einem Nutzer eine entsprechende Mitteilung (an dessen Terminal oder PC 50 über das Internet) übermittelt werden wenn z.B. ein einer Meßstelle zugeordneter Verbraucher einen vorherbestimmten Verbrauchswert überschreitet. Außerdem kann in diesem Fall durch ein von der zentralen Rechnereinheit erzeugtes Steuersignal der jeweilige Verbraucher durch eine Nachricht an den Steuerrechner 30 über das Internet abgeschaltet oder in seiner Leistungsaufnahme begrenzt werden. Damit kann ein Benutzer zu einem frühen Zeitpunkt einer Überschreitung seines Energiebudgets entgegenwirken.

In der vorstehend beschriebenen Ausführungsform der Erfindung befindet sich das/die Terminal/s 50 innerhalb der jeweiligen Liegenschaft, damit der Mieter/Pächter oder dergl. direkt die für ihn freigegebenen Daten des Datensatzes der Liegenschaft und andere Informationen abrufen oder an sein Terminal 50 gesendet bekommen kann. Alternativ oder zusätzlich dazu kann das Terminal 50 auch an einem beliebigen, entfernten Ort sich befinden, so daß zum Beispiel der Eigentümer, der Hausverwalter oder eine abwesender Mieter die Daten und Informationen einsehen kann.

Die vorliegende Erfindung erlaubt die Integration unterschiedlicher Angebote (Fernsehen, Hörfunk, Internet, Homebanking, Gebäudeleittechnik, Verbrauchserfassung, Alarmanlage etc.) in eine gemeinsame dem Benutzer dargebotene Bedienoberfläche. Dazu dient das Terminal 50, das über das Internet, LAN- oder WAN-Verbindungen, Profibus oder dergl. mit der Rechnereinheit 40 kommuniziert um die Daten und Informationen von der Rechnereinheit 40 zu dem jeweiligen Terminal 50 und in die entgegengesetzte Richtung zu senden. Daneben sind die einzelnen Sensoren in der jeweiligen Liegenschaft ebenfalls über entsprechende Leitungen oder über drahtlose Verbindungen und Kommunikationsprotokolle mit der Rechnereinheit 40 oder dem Erfassungsrechner 48 verbunden. Das Terminal 50 kann ggf. auch mit den Sensoren verbunden sein und als Konzentrator der erfaßten Signale vor deren Übermittlung an die Rechnereinheit 40 oder den Erfassungsrechner 48 dienen. Insbesondere wenn neben den Verbrauchssensoren auch noch mit der Rechnereinheit 40 verbundene Sensoren an den Fenstern und/oder Türen vorhanden sind, kann die Rechnereinheit 40 erkennen, daß zum einen ein Sicherheitsproblem existieren kann; damit ist eine Alarmanlagenfunktion realisierbar. Zum anderen kann der Nutzer darauf aufmerksam gemacht werden, daß in einem Raum sowohl das Fenster geöffnet ist, als auch die Heizung eingeschaltet ist. Mit einer entsprechenden Rück-Kanaltechnik kann bei geöffnetem Fenster auch die Heizung des betreffenden Raumes durch die Rechnereinheit 40 gesteuert abgeschaltet oder zurückgefahren werden.

Ein entscheidender Vorteil der vorliegenden Erfindung besteht darin, daß Bewohner oder Nutzer einer Liegenschaft, die mit der Erfindung ausgestattet ist, erheblich besser informiert sein oder werden kann, als ein Bewohner oder Nutzer einer Liegenschaft ohne die Erfindung. Dabei wird der Benutzer über ein einziges, einheitliches Medium über Vorgänge informiert, die sowohl auf dem technischen, als auch auf dem administrativen Bereich liegen können. Darüber hinaus wird dem Benutzer eine einfache Verbindung zu technischen und administrativen Daten oder Sachverhalten bereitgestellt, die ihm sonst nicht zugänglich sind. Dabei werden alle Daten und Informationen in einem einheitlichen Format dargeboten, um auch weniger versierten Benutzern einen einfachen und schnellen Zugang zu ermöglichen.

Außerdem kann neben dem erfindungsgemäßen System auch noch eine Vielzahl anderer Dienstleistungen (online-banking, online-shopping oder andere oben genannte Dienste) über das einmal installierte erfindungsgemäße System für den Benutzer der jeweiligen Liegenschaft zugänglich gemacht werden.

## Patentansprüche

1. Ein rechnergestütztes Datenerfassungs-, Datenauswertungs- und Kommunikationssystem für Nutzer einer Liegenschaft (10), mit
- wenigstens einer Meßstelle (12b, 14b, 16b, 18b, 20b, 22b), die dazu eingerichtet ist, einen die Liegenschaft betreffenden Heizmengenwert als einen Verbrauchswert zu erfassen,
- einem Steuerrechner (30) zum gebäudebezogenen Empfangen der Verbrauchswerte der Meßstellen und Steuern einer Datenübertragungseinrichtung (34), die dazu eingerichtet sind, ein den jeweiligen Verbrauchswert wiedergebendes Signal von der Meßstelle (12b, 14b, 16b, 18b, 20b, 22b) an eine zentrale Rechnereinheit (38, 40) zu übermitteln,
- einer der zentralen Rechnereinheit (38, 40) zugeordneten Datenbasis (42), in der ein die Liegenschaft betreffender Datensatz geführt ist, wobei
- der Datensatz den übermittelten aktuellen Heizmengenwert und einen mit diesem in Beziehung setzbaren, vorherbestimmten Erwartungswert enthält, und wobei
- ein Benutzer des Systems Zugriff auf den Datensatz hat, um den aktuellen Stand des Heizmengenwertes und ein Verhältnis zwischen dem aktuellen Heizmengenwert und dem vorherbestimmten Erwartungswert zu erhalten, **dadurch gekennzeichnet, daß**
der Steuerrechner (30) des jeweiligen Gebäudes dazu eingerichtet ist, aktuelle Temperaturverläufe an die zentrale Rechnereinheit (38, 40) zu übermitteln und dass die zentrale Rechnereinheit dazu eingerichtet ist, jahresbedingte Temperaturschwankungen bei der Bestimmung des Erwartungswerts herauszurechnen und dem Benutzer bei einer signifikanten Änderung des jeweiligen Datensatzes eine automatische Mitteilung zu übermitteln.

2. Datenerfassungs-, Datenauswertungs- und Kommunikationssystem nach Anspruch 1, wobei
- die Meßstelle (12b, 14b, 16b, 18b, 20b, 22b) dazu eingerichtet ist, einen Strom-, Wasser- und/oder Gas-Verbrauchswert zu erfassen, wobei der jeweilige Verbrauchswert sich auf die ganze Liegenschaft (12, 14, 16, 18, 20, 22) oder auf einen Teil bezieht.

3. Datenerfassungs-, Datenauswertungs- und Kommunikationssystem nach Anspruch 1 oder 2, wobei
- die Datenübertragungseinrichtung (30, 34) dazu eingerichtet ist, erfaßte Meßwerte unmittelbar nach oder bei deren Erfassung an die zentrale Rechnereinheit (38, 40) weiterzuleiten, oder mehrere Meßwerte, ggf. auch von unterschiedlichen Meßstellen (12b, 14b, 16b, 18b, 20b, 22b) zusammengefaßt an die zentrale Rechnereinheit (38, 40) weiterzuleiten.

4. Datenerfassungs-, Datenauswertungs-, und Kommunikationssystem nach einem der vorhergehenden Ansprüche, wobei
- die Datenbasis (42) neben dem die Liegenschaft betreffenden Datensatz für Benutzer weitere Informationen enthält, die direkt oder indirekt mit der jeweiligen Liegenschaft oder einer Gruppe von Liegenschaften in Verbindung stehen.

5. Datenerfassungs-, Datenauswertungs-, und Kommunikationssystem nach einem der vorhergehenden Ansprüche, wobei
- ein Benutzer des Systems auf den Datensatz erst nach einer Überprüfung seiner Zugangsberechtigung Zugriff auf die Datenbasis (42) oder Teile davon erhält.

6. Datenerfassungs-, Datenauswertungs- und Kommunikationssystem nach einem der vorhergehenden Ansprüche, wobei
- einer Meßstelle (12b, 14b, 16b, 18b, 20b, 22b) zugeordnete Verbraucher (12a, 14a, 16a, 18a, 20a, 22a) bei Überschreiten eines vorherbestimmten Verbrauchswertes durch ein von der zentralen Rechnereinheit (38, 40) erzeugtes Steuersignal abschaltbar sind, wobei das Steuersignal mittels einer Datenübertragungseinrichtung an den jeweiligen Verbraucher (12a, 14a, 16a, 18a, 20a, 22a) übermittelbar ist.

7. Datenerfassungs-, Datenauswertungs-, und Kommunikationssystem nach einem der vorhergehenden Ansprüche, wobei
- von der zentralen Rechnereinheit (40) einem Nutzer bei Überschreiten eines vorherbestimmten Verbrauchswertes eine Warnmitteilung über das Überschreiten des jeweiligen vorherbestimmten Verbrauchswertes übermittelt wird.

8. Datenerfassungs-, Datenauswertungs-, und Kommunikationssystem nach einem der vorhergehenden Ansprüche, wobei
- der jeweilige vorherbestimmte Erwartungswert aus einem Vergleich mit entsprechenden Verbrauchswerten anderer Liegenschaften und/oder mit Verbrauchswerten der jeweiligen Liegenschaft aus der Vergangenheit bestimmt wird.

9. Datenerfassungs-, Datenauswertungs-, und Kommunikationssystem nach einem der vorhergehenden Ansprüche, wobei
- von der zentralen Rechnereinheit (40) einem Nutzer nach einer vorbestimmten Anzahl von Aktualisierungen des jeweiligen Datensatzes der Liegenschaft eine entsprechende Mitteilung übermittelt wird.

## Claims

1. A computer-assisted data acquisition, data analysis and communications system for users of a property (10), comprising
- at least one measuring point (12b, 14b, 16b, 18b, 20b, 22b), which is set up to record a heating quantity value relating to the property as a consumption value,
- a control computer (30) for receiving building-specific consumption values of the measuring points and controlling a data transmission device (34), which are set up to transmit a signal expressing the respective consumption value from the measuring point (12b, 14b, 16b, 18b, 20b, 22b) to a central processing unit (38, 40),
- a database (42) associated with the central processing unit (38, 40), in which a data set relating to the property is maintained, wherein
- the data set contains the transmitted current heating quantity value and a predetermined expected value that can be related thereto, and wherein
- a user of the system has access to the data set in order to obtain the current status of the heating quantity value and a ratio between the current heating quantity value and the predetermined expected value,
**characterised in that** the control computer (30) of the respective building is set up to transmit current temperature sequences to the central processing unit (38, 40)
and **in that** the central processing unit is set up to work out seasonal temperature fluctuations when determining the expected value and to transmit an automatic message to the user when there is a significant change in the respective data set.

2. A data acquisition, data analysis and communications system according to Claim 1, wherein
- the measuring point (12b, 14b, 16b, 18b, 20b, 22b) is set up to record an electricity, water and/or gas consumption value, the respective consumption value relating to the entire property (12, 14, 16, 18, 20, 22) or to a part thereof.

3. A data acquisition, data analysis and communications system according to Claim 1 or 2, wherein
- the data transmission device (30, 34) is set up to relay recorded measured values directly after or during their recording to the central processing unit (38, 40), or several measured values, possibly also compiled from different measuring points (12b, 14b, 16b, 18b, 20b, 22b), to the central processing unit (38, 40).

4. A data acquisition, data analysis and communications system according to one of the preceding Claims, wherein
- the data base (42) contains for the user, apart from the data set relating to the property, additional information which is directly or indirectly connected with the respective property or a group of properties.

5. A data acquisition, data analysis and communications system according to one of the preceding Claims, wherein
- a user of the system only gains access to the database (42) or parts thereof once his access authorisation has been checked.

6. A data acquisition, data analysis and communications system according to one of the preceding Claims, wherein
- consumers (12a, 14a, 16a, 18a, 20a, 22a) associated with a measuring point (12b, 14b, 16b, 18b, 20b, 22b) can be switched off by a control signal generated by the central processing unit if a predetermined consumption value is exceeded, where the control signal can be transmitted by means of a data transmission device to the respective consumer (12a, 14a, 16a, 18a, 20a, 22a).

7. A data acquisition, data analysis and communications system according to one of the preceding Claims, wherein
- a warning message is transmitted by the central processing unit (40) to a user if a predetermined consumption value is exceeded regarding the fact that the respective predetermined consumption value has been exceeded.

8. A data acquisition, data analysis and communications system according to one of the preceding Claims, wherein
- the respective predetermined value is determined from a comparison with corresponding consumption values of other properties and/or with consumption values of the respective property from the past.

9. A data acquisition, data analysis and communications system according to one of the preceding Claims, wherein
- an appropriate message is transmitted by the central processing unit (40) to a user after a predetermined number of updates of the respective data set of the property.

## Revendications

1. Système de saisie de données, d'exploitation de données et de communication assistée par ordinateur pour utilisateur d'un immeuble (10), avec
- au moins un point de mesure (12b, 14b, 16b, 18b, 20b, 22b) qui est apte à saisir une valeur de quantité de chauffage concernant l'immeuble comme valeur de consommation,
- un ordinateur pilote (30) pour recevoir les valeurs de consommation des points de mesure se rapportant au bâtiment et pour piloter un dispositif de transmission de données (34) qui est apte à transmettre un signal reproduisant la valeur de consommation correspondante provenant du point de mesure (12b, 14b, 16b, 18b, 20b, 22b) à une unité de calcul centrale (38, 40),
- une base de données (42) associée à l'unité de calcul centrale (38, 40) dans laquelle est tenu un jeu de données concernant l'immeuble,
- le jeu de données comportant la valeur de quantité de chauffage actuelle transmise et une valeur escomptée prédéterminée et pouvant être mise en relation avec celle-ci ; et
- un utilisateur du système ayant un accès au jeu de données pour obtenir l'état actuel de la valeur de quantité de chauffage et le rapport entre la valeur de quantité de chauffage actuelle et la valeur escomptée prédéterminée,
**caractérisé en ce que**
- l'ordinateur pilote (30) du bâtiment considéré est apte à pouvoir transmettre les évolutions de température actuelles à l'unité de calcul centrale (38, 40), et **en ce que** l'unité de calcul centrale est apte à pouvoir calculer des variations de température saisonnières lors de la détermination de la valeur escomptée et à pouvoir transmettre à l'utilisateur un message automatique en cas de changement significatif des jeux de données correspondants.

2. Système de saisie de données, d'exploitation de données et de communication selon la revendication 1, dans lequel
- le point de mesure (12b, 14b, 16b, 18b, 20b, 22b) est apte à pouvoir saisir une valeur de consommation d'électricité, d'eau et/ou de gaz, la valeur de consommation se rapportant à l'ensemble de l'immeuble (12, 14, 16, 18, 20, 22) ou à une partie.

3. Système de saisie de données, d'exploitation de données et de communication selon la revendication 1 ou 2, dans lequel
- l'unité de transmission de données (30, 34) est apte à pouvoir transmettre les valeurs saisies directement après ou pendant leur saisie à l'unité de calcul centrale (38, 40), ou à pouvoir transmettre plusieurs valeurs de mesure, le cas échéant provenant également de différents points de mesure (12b, 14b, 16b, 18b, 20b, 22b), regroupées à l'unité de calcul centrale (38, 40).

4. Système de saisie de données, d'exploitation de données et de communication selon l'une des revendications précédentes, dans lequel
- la base de données (42) contient outre le jeu de données concernant l'immeuble d'autres informations pour l'utilisateur qui sont en liaison directe ou indirecte avec l'immeuble considéré ou un groupe d'immeubles.

5. Système de saisie de données, d'exploitation de données et de communication selon l'une des revendications précédentes, dans lequel
- un utilisateur du système n'a accès à la base de données (42) ou une partie de celle-ci / au jeu de données qu'après un contrôle de son droit d'accès.

6. Système de saisie de données, d'exploitation de données et de communication selon l'une des revendications précédentes, dans lequel des consommateurs (12a, 14a, 16a, 18a, 20a, 22a) associés à une cellule de mesure (12b, 14b, 16b, 18b, 20b, 22b) peuvent être débranchés en cas de dépassement d'une valeur de consommation déterminée à l'avance par un signal de contrôle émis par l'unité de calcul centrale (38, 40), le signal de contrôle pouvant être transmis par l'intermédiaire d'un dispositif de transmission de données aux consommateurs considérés (12a, 14a, 16a, 18a, 20a, 22a).

7. Système de saisie de données, d'exploitation de données et de communication selon l'une des revendications précédentes, dans lequel,
- en cas de dépassement d'une valeur de consommation déterminée à l'avance, l'unité de calcul centrale (38, 40) transmet à un usager un message d'avertissement portant sur ledit dépassement de la valeur de consommation déterminée à l'avance.

8. Système de saisie de données, d'exploitation de données et de communication selon l'une des revendications précédentes, dans lequel la valeur attendue déterminée à l'avance considérée est déterminée en comparant à des valeurs de consommation correspondantes d'autres immeubles et/ou à des valeurs de consommation de l'immeuble du passé.

9. Système de saisie de données, d'exploitation de données et de communication selon l'une des revendications précédentes, dans lequel l'unité de calcul centrale (40) transmet à un usager un message correspondant après un nombre prédéterminé d'actualisation du jeu de données correspondant de l'immeuble.
